# EUROPÄISCHE PATENTANMELDUNG

(11) **EP 4 050 218 A1**
(43) Veröffentlichungstag der Anmeldung: **31.08.2022**
(21) Anmeldenummer: 22155981.8
(22) Anmeldetag: 09.02.2022
(51) Int. Cl.: F04D 29/12, F04C 15/00, F04D 29/62, F04D 29/64, F16J 15/34

(54) **DICHTANORDNUNG FÜR PUMPE**

(30) Priorität: 26.02.2021 DE 102021104723
(71) Anmelder: Watson Marlow GmbH, 41569 Rommerskirchen (DE)
(72) Erfinder: WILL, Sven-Eric, 74360 Ilsfeld (DE); WALTER, Florian, 74360 Ilsfeld (DE); MAYER, Eric, 74360 Ilsfeld (DE)
(74) Vertreter: HL Kempner Patentanwalt, Rechtsanwalt, Solicitors (England and Wales), Irish Patent Agent Partnerschaft mbB

(57) **Zusammenfassung**

Eine Pumpe (10) umfasst:
wenigstens einen um eine Drehachse drehbaren Rotor (12),
ein Pumpengehäuse (14), das den Rotor (12) umgibt, wobei ein Pumpenkanal (18) zwischen einer radial innen liegenden Oberfläche des Pumpengehäuses (14) und einer radial außen liegenden Oberfläche des Rotors (12) gebildet ist, und
eine Dichtanordnung (100), welche den Pumpenkanal (18) an einer Endfläche des Rotors (12) abdichtet, wobei die Dichtanordnung (100) umfasst:
eine Gleitfläche, welche an einem Element aus dem Rotor (12) und dem Pumpengehäuse vorgesehen ist und welche sich senkrecht zur Achsrichtung des Rotors (12) erstreckt;
eine statische Fläche, welche an dem jeweils anderen Element aus dem Rotor (12) und dem Pumpengehäuse (14) vorgesehen ist; und
ein erstes Elastomerelement, das an der statischen Fläche angebracht ist und in axialer Richtung gegen die Gleitfläche gedrückt wird.

## Beschreibung

### Technisches Gebiet

Die vorliegende Offenbarung betrifft eine Dichtanordnung für eine Pumpe mit wenigstens einem um eine Drehachse drehbaren Rotor mit einer Rotornabe, und einem Pumpengehäuse, das den Rotor umgibt, wobei ein Pumpenkanal zwischen einer radial innen liegenden Oberfläche des Pumpengehäuses und einer radial außen liegenden Oberfläche des Rotors gebildet ist.

### Hintergrund

Für Pumpen, und insbesondere für Pumpen, mit denen flüssige Lebensmittel gefördert werden, werden üblicherweise Gleitringdichtungen verwendet, um einen Pumpenkanal gegenüber anderen Teilen der Pumpe, wie beispielsweise gegenüber der Welle, auf der wenigstens ein Rotor läuft, oder gegenüber einem Motor, der den wenigstens einen Rotor antreibt, abzudichten.

Bekannte Gleitringdichtungen bestehen aus einer Gleitfläche aus Keramik und einer statischen Fläche, welche üblicherweise aus Keramik oder Kohle hergestellt ist und welche federnd gegen die Gleitfläche vorgespannt ist. Bei Betrieb einer Pumpe ist die Gleitringdichtung Vibrationen ausgesetzt, so dass die Funktion der Dichtung beeinträchtigt werden kann. Außerdem müssen Gleitringdichtungen bei der Montage exakt ausgerichtet werden, wodurch die Wartung und Reinigung der Pumpe erschwert werden kann.

Es ist demgegenüber eine Aufgabe der vorliegenden Erfindung, eine verbesserte Dichtung für Pumpen bereitzustellen, welche eine zuverlässige Dichtwirkung erzielt und welche einfach gewartet, gereinigt und ausgetauscht werden kann.

### Überblick über die Erfindung

Zur Lösung dieser Aufgabe wird eine Pumpe bereitgestellt, mit wenigstens einem um eine Drehachse drehbaren Rotor, einem Pumpengehäuse, das den Rotor umgibt, wobei ein Pumpenkanal zwischen einer radial innen liegenden Oberfläche des Pumpengehäuses und einer radial außen liegenden Oberfläche des Rotors gebildet ist, und einer Dichtanordnung, welche den Pumpenkanal an einer Endfläche des Rotors abdichtet. Bei der Endfläche des Rotors kann es sich hierbei um eine Fläche handeln, die senkrecht zur Achsrichtung des Rotors verläuft. Die Dichtanordnung umfasst eine Gleitfläche, welche an einem Element aus dem Rotor und dem Pumpengehäuse vorgesehen ist und welche sich senkrecht zur Achsrichtung des Rotors erstreckt; eine Stützfläche, welche an dem jeweils anderen Element aus dem Rotor und dem Pumpengehäuse vorgesehen ist; und ein erstes Elastomerelement, das an der statischen Fläche angebracht ist und in axialer Richtung gegen die Gleitfläche gedrückt wird. Durch das verformbare Elastomerelement können Vibrationen und Verformungen des Rotors oder des Pumpengehäuses im Betrieb der Pumpe zumindest teilweise ausgeglichen werden. Somit kann ein konstanter Kontakt zwischen der Gleitfläche und dem Elastomerelement sichergestellt werden, so dass die beanspruchte Pumpe mit dieser Dichtanordnung eine zuverlässige Abdichtung des Pumpenkanals gegenüber anderen Komponenten der Pumpe, wie beispielsweise einem Antriebsmotor oder dergleichen, erreicht.

Für die Funktion der Dichtanordnung ist es dabei unerheblich, ob die Gleitfläche am Rotor und die Stützfläche mit dem Elastomerelement am Pumpengehäuse angeordnet ist, oder ob die Gleitfläche am Pumpengehäuse angebracht ist und die Stützfläche mit dem Elastomerelement am Rotor montiert ist.

Gemäß einiger Ausführungsformen kann die Gleitfläche aus einem Keramikwerkstoff, wie beispielsweise Siliciumkarbid, SiC, gesintertem Siliciumkarbid, SSiC oder Wolframkarbid, TC gebildet sein. Hierdurch können eine hohe Festigkeit und ein geringer Reibungskoeffizient der Gleitfläche sichergestellt werden. Es ist selbstverständlich auch möglich, die Gleitfläche aus einem beliebigen Keramik-Werkstoff herzustellen.

Im Gegensatz zu bekannten Gleitringdichtungen, bei denen üblicherweise eine Keramik-Gleitfläche gegen eine statische Fläche gepresst wird, die ebenfalls aus Keramik oder beispielsweise aus einem Kohlewerkstoff hergestellt ist, und wobei die statische Fläche federnd vorgespannt ist, ist somit bei der Dichtanordnung gemäß der vorliegenden Offenbarung eine Keramik-Gleitfläche in Kontakt mit einem Elastomerelement, das in axialer Richtung gegen die Gleitfläche gedrückt wird.

Gemäß einiger Ausführungsformen kann die Dichtanordnung ferner eine Dichthülse umfassen, welche im Pumpengehäuse vorgesehen ist, wobei eine Oberfläche der Dichthülse die Stützfläche bildet. Eine derartige Dichthülse kann beispielsweise in Pumpen, welche ursprünglich mit anderen Dichtsystemen konzipiert wurden, nachgerüstet werden. Weiterhin kann eine derartige Dichthülse bei der Wartung und Reinigung der Pumpe jeweils einfach entfernt und ausgetauscht werden.

Dabei kann Dichthülse eine Metallhülse sein, welche über ein zweites Elastomerelement am Pumpengehäuse in axialer Richtung abgestützt ist. Durch eine derartige, elastische Abstützung der Dichthülse am Pumpengehäuse kann die Dichtanordnung auch bei starken Vibrationen der Pumpe weiterhin zuverlässig arbeiten, da beide Elastomerelement jeweils elastisch durch ihre elastische Verformung Relativbewegungen zwischen dem Pumpengehäuse und dem Rotor ausgleichen können.

Gemäß einiger Ausführungsformen kann die Dichthülse in axialer Richtung relativ zum Pumpengehäuse beweglich sein, und das zweite Elastomerelement kann zwischen dem Pumpengehäuse und einer senkrecht zur axialen Richtung verlaufenden Anlagefläche der Dichthülse vorgesehen sein. Dadurch kann die Dichthülse im Betrieb der Pumpe in axialer Richtung Ausgleichsbewegungen relativ zum Pumpengehäuse ausführen, während die beiden Elastomerelemente die Dichthülse in radialer Richtung zwischen der Gleitfläche und dem Pumpengehäuse elastisch abstützen.

Um eine hohe Dichtigkeit der Dichtanordnung zu erreichen, können beide Elastomerelemente in axialer Richtung komprimiert sein.

Gemäß einiger Ausführungsformen kann die Dichthülse wenigstens eine Verdrehsicherung umfassen, um eine Verdrehung der Dichthülse gegenüber dem Pumpengehäuse zu verhindern. Eine derartige Verdrehsicherung kann beispielsweise durch Stifte oder Vorsprünge an der Dichthülse realisiert werden, welche in entsprechende Ausnehmungen im Pumpengehäuse eingreifen, oder umgekehrt. Dadurch kann die Montage und Ausrichtung der Dichthülse im Pumpengehäuse vereinfacht werden.

Gemäß einiger Ausführungsformen umfasst die Dichthülse einen zylinderförmigen Grundkörper und einen vom Grundkörper radial nach außen weisenden Kragen, wobei die Dichthülse über den Kragen am Pumpengehäuse abgestützt ist.

Dabei kann eine Oberfläche des Kragens die Stützfläche sein, welche das Elastomerelement aufnimmt, so dass die beiden Elastomerelemente an in axialer Richtung gegenüberliegenden Flächen des Kragens aufgenommen werden und die Dichthülse durch den Kragen somit in axialer Richtung zwischen dem Pumpengehäuse und der Gleitfläche abgestützt ist. Alternativ kann auch eine zylinderförmige Dichthülse vorgesehen sein, welche an ihren axialen Endflächen jeweils das erste und das zweite Elastomerelement aufnimmt.

Gemäß einiger Ausführungsformen kann der Rotor eine Aufnahmenut aufweisen, in welcher ein Gleitelement austauschbar montiert ist, wobei das Gleitelement die Gleitfläche umfasst. Bei Verschleiß oder Verunreinigung der Gleitfläche kann das Gleitelement somit ausgetauscht werden.

Dabei kann das Gleitelement eine Halterung umfassen, mittels dessen es am Rotor befestigbar ist, und einen Gleitkörper, dessen in axialer Richtung außen liegende Oberfläche die Gleitfläche bildet. Der Gleitkörper kann vollständig aus einem Keramikwerkstoff hergestellt sein, oder er kann eine Keramik-Gleitfläche umfassen, die an einen Grundkörper aus einem anderen Material montiert ist.

Diese Halterung kann als Halterungsmanschette mit einem L-förmigen Querschnitt ausgeführt sein und aus einem Elastomermaterial oder aus PTFE hergestellt sein. Mittels der Halterungsmanschette kann die Gleitfläche in eine Nut im Rotor eingepresst werden und es kann sichergestellt werden, dass der Übergang vom Rotor zur Gleitfläche abgedichtet ist.

Gemäß einem weiteren Aspekt stellt die vorliegende Erfindung auch ein Dichtungsmodul bereit, umfassend ein erstes und ein zweites Elastomerelement; eine Dichthülse mit jeweiligen Aufnahmen für das erste und das zweite Elastomerelement, wobei die Aufnahmen in Flächen der Dichthülse gebildet sind, die sich in axialer Richtung gegenüber liegen, und eine Gleitfläche, welche auf das erste Elastomerelement aufgelegt ist und welche an einem Rotor, der relativ zur Dichthülse rotiert, montierbar ist. Ein derartiges Dichtungsmodul kann beispielsweise in vorhandene Pumpen oder andere vorhandene Maschinen nachgerüstet werden, um eine verbesserte Abdichtung des Pumpenkanals zu erreichen. Dabei kann die Gleitfläche jeweils an einen Rotor oder an ein anderes drehendes Element montiert werden, und die Dichthülse mit den beiden Elastomerelementen kann in ein Pumpengehäuse eingeschoben werden oder an einem anderen statischen Bauteil befestigt werden. Alternativ kann auch eine umgekehrte Anordnung bereitgestellt werden, wobei die Gleitfläche in einem statischen Bauteil, wie beispielsweise einem Pumpengehäuse, montiert wird, und die Dichthülse mit den Elastomerelementen an einem Rotor befestigt werden kann.

Dabei kann die Dichthülse einen zylinderförmigen Grundkörper und einen vom Grundkörper radial nach außen weisenden Kragen umfasst, wobei die Aufnahmen für die Elastomerelemente in gegenüberliegenden Oberflächen des Kragens gebildet sind. Insbesondere bei der Nachrüstung von bestehenden Pumpen kann durch geeignete Dimensionierung des Kragens auf einfache Weise eine Dichthülse erzeugt werden, welche in bestehende Pumpengehäuse passt und welche an einer geeigneten Fläche des Pumpengehäuses in axialer Richtung über das zweite Elastomerelement abgestützt werden kann.

Gemäß einem weiteren Aspekt stellt die vorliegende Erfindung auch ein Rotormodul bereit, umfassend einen Rotor, an dem eine senkrecht zur axialen Richtung verlaufende Gleitfläche angebracht ist, ein erstes und ein zweites Elastomerelement; eine Dichthülse mit jeweiligen Aufnahmen für das erste und das zweite Elastomerelement, wobei die Aufnahmen in Flächen der Dichthülse gebildet sind, die sich in axialer Richtung gegenüber liegen, und wobei das erste Elastomerelement an der Gleitfläche des Rotors anliegt. Ein derartiges Rotormodul kann beispielsweise in bestehende Pumpen nachgerüstet werden, wobei lediglich die Dichthülse entsprechend angepasst werden muss, um als Ersatz für ein vorhandenes Dichtsystem eine zuverlässige Abdichtung des Pumpenkanals zu erreichen.

Dabei kann der Rotor eine Aufnahmenut aufweisen, in welcher über eine im Querschnitt L-förmige Halterungsmanschette ein Gleitkörper austauschbar montiert ist, wobei der Gleitkörper die Gleitfläche umfasst. Dadurch kann die Gleitfläche des Rotors zur Reinigung oder Wartung schnell und einfach aus- und eingebaut werden.

Im Folgenden werden einzelne, beispielhafte Ausführungsformen anhand der beiliegenden Zeichnungen beschrieben.

### Kurzbeschreibung der Zeichnungen

Fig. 1 zeigt eine Schnittansicht einer Pumpe, in welcher eine Dichtanordnung gemäß einer Ausführungsform vorgesehen ist;
Fig. 2 zeigt eine Ansicht der in Fig. 1 dargestellten Dichtanordnung; und
Fig. 3 zeigt einen Schnitt durch eine Dichthülse der in Fig. 1 gezeigten Dichtanordnung.

### Detaillierte Beschreibung

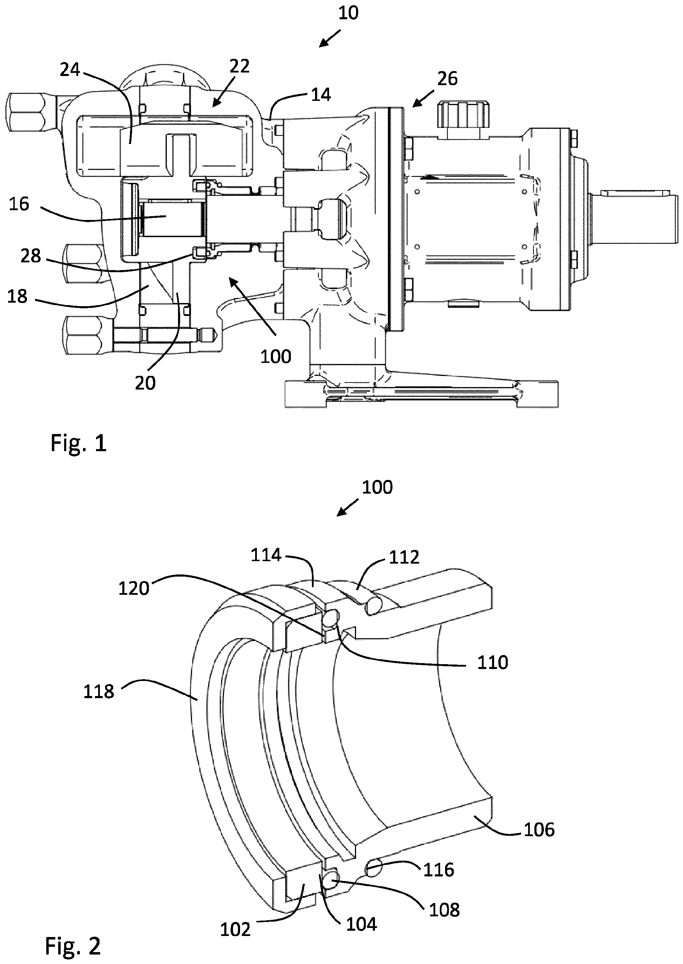

Wie in Fig. 1 gezeigt ist, hat eine Pumpe 10 einen Rotor 12 und ein Pumpengehäuse 14. Der Rotor 12 ist drehbar um eine Welle 16 gelagert, und zwischen dem Rotor 12 und dem Pumpengehäuse 14 ist ein Pumpenkanal 18 gebildet, in dem ein zu pumpendes Fluid gefördert wird. In der folgenden Beschreibung beziehen sich die Begriffe "axiale Richtung" und "radiale Richtung" jeweils auf die axialen und radialen Richtungen der Welle 16 bzw. des Rotors 12.

Bei der gezeigten Pumpe 10 hat der Rotor 12 einen sich in radialer Richtung erstreckenden Rotorkragen 20, der wellenförmig verläuft und mittels dessen das Fluid im Pumpenkanal 18 gefördert wird. Eine Sperrvorrichtung 22 mit einem Sperrschieber 24, der auf den Rotorkragen 20 aufgesetzt ist, verhindert, dass zu pumpendes Fluid entgegen der Pumprichtung strömt.

Auf der Seite des Pumpengehäuses 14, die dem Rotor 12 abgewandt ist, ist eine Antriebseinheit 26 mit einem Motor vorgesehen, der den Rotor 12 antreibt. An einer im Wesentlichen senkrecht zur axialen Richtung verlaufenden Endfläche des Rotors 12 ist eine Dichtanordnung 100 angebracht, welche den Pumpenkanal 18 gegenüber dem Pumpengehäuse 14 und der Antriebseinheit 26 abdichtet.

Die gezeigte Pumpe 10 ist dabei lediglich ein Beispiel für eine Pumpe, bei der die erfindungsgemäße Dichtanordnung 100 eingesetzt werden kann. Die Dichtanordnung 100 ist nicht auf den in Fig. 1 gezeigten Pumpentyp beschränkt, sondern kann grundsätzlich bei allen Pumpen-Bauarten eingesetzt werden, welche einen Rotor oder mehrere Rotoren aufweisen, der/die gegenüber einem Pumpengehäuse abgedichtet werden soll/en.

Wie in Fig. 2 gezeigt, umfasst die Dichtanordnung 100 einen Gleitkörper 102 mit einer senkrecht zur axialen Richtung verlaufenden Gleitfläche oder dynamischen Fläche 104, wobei der Gleitkörper 102, wie in Fig. 1 gezeigt, in einer Aufnahmenut 28 des Rotors 12 aufgenommen ist. Zumindest die Gleitfläche 104, oder auch der komplette Gleitkörper 102, sind dabei aus einem Keramikwerkstoff, wie beispielsweise Siliciumkarbid, SiC, gesintertes Siliciumkarbid, SSiC oder Wolframkarbid, TC gefertigt. Hierbei kann jeder Keramikwerkstoff mit geeigneten Reibungs- und Abriebeigenschaften verwendet werden.

Am Pumpengehäuse 14 ist, wie ebenfalls in Fig. 1 gezeigt, eine Dichthülse 106 angebracht, welche ein erstes Elastomerelement 108 aufweist, das beispielsweise in einer Nut 110 in der Dichthülse 106 aufgenommen sein kann. Die Dichthülse 106 ist dabei bei der gezeigten Ausführungsform durch ein zweites Elastomerelement 112 am Pumpengehäuse 14 abgestützt.

Die der Gleitfläche 104 des Rotors 12 zugewandte Fläche 120 der Dichthülse 106 bildet dabei eine statische Fläche 120 der Dichtanordnung 100.

Die Elastomerelement 108, 112 können beispielsweise jeweils ein O-Ring oder Quadring sein. Dabei ist das erste Elastomerelement 108 in Kontakt mit der Gleitfläche 104 und dadurch zur Erzielung einer zuverlässigen Dichtwirkung im Wesentlichen ringförmig. Beid der gezeigten Ausführungsform sind beide Elastomerelemente 108, 112 als O-Ringe ausgeführt.

Jedoch muss das zweite Elastomerelement 112, über das die Dichthülse 106 am Pumpengehäuse 14 abgestützt ist, nicht zwingend als Ring ausgebildet sein, sondern kann beispielsweise eine Mehrzahl von Einzel-Elastomerelementen umfassen, welche jeweils einen bestimmten Abschnitt der Dichthülse 106 derart am Pumpengehäuse 14 abstützen, dass das erste Elastomerelement 108 in axialer Richtung gegen die Gleitfläche 104 gedrückt wird.

Die in Fig. 2 gezeigte Dichthülse 106 weist einen Kragen 114 auf, der sich von einem zylinderförmigen Grundkörper der Dichthülse 106 radial nach außen erstreckt und der eine Schulterfläche 116 bereitstellt, an der in axialer Richtung das zweite Elastomerelement 112 anliegt.

Alternativ ist jedoch auch beispielsweise eine hohlzylinderförmige Dichthülse ohne Kragen möglich, bei der die beiden Elastomerelemente 108, 112 an den beiden Stirnseiten des Hohlzylinders vorgesehen sind, oder die Form der Dichthülse kann mit entsprechenden Vorsprüngen oder Stützflächen an die Form eines Pumpengehäuses angepasst werden, das mit einer Dichtanordnung nachgerüstet werden soll.

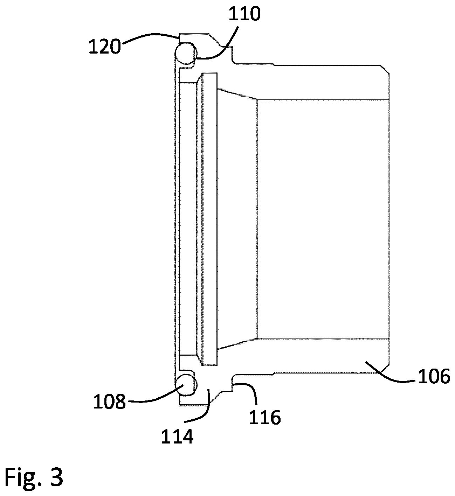

Die in Fig. 2 und 3 dargestellte Dichthülse 106 hat keine Verdrehsicherung, sondern wird durch die Haftreibung zwischen der Schulterfläche 116 der Dichthülse 106 und dem zweiten Elastomerelement 112 bzw. durch die Haftreibung zwischen dem zweiten Elastomerelement 112 und dem Pumpengehäuse 14 an ihrer Position gehalten. Es ist jedoch auch möglich, eine Verdrehsicherung in Form von Stiften oder Vorsprüngen an der Dichthülse 106 vorzusehen, die dann in entsprechende Aussparungen im Pumpengehäuse 14 eingreifen. Bei einer derartigen Verdrehsicherung ist jedoch zu beachten, dass die Dichthülse 106, auch wenn sie am Verdrehen gegenüber dem Pumpengehäuse 14 gesichert wird, in axialer Richtung weiterhin beweglich gegenüber dem Pumpengehäuse 14 bleibt, damit eine elastische Komprimierung der beiden Elastomerelemente 108, 112 in axialer Richtung erzielt werden kann.

Die Dichthülse 106 der dargestellten Ausführungsform ist aus Metall hergestellt. Jedoch können bei der erfindungsgemäßen Dichtanordnung 100 auch Dichthülsen aus anderen Materialien, wie beispielsweise Kunststoff- oder Keramikmaterialien, eingesetzt werden.

Wie in Fig. 3 gezeigt ist, ist die Nut 110 in der Dichthülse 106 derart bemessen, dass das erste Elastomerelement 108 in unkomprimiertem Zustand in axialer Richtung über eine Stirnfläche der Dichthülse 106 hinausragt.

In Fig. 2 ist weiterhin ein Gleitkörper 102 gezeigt, das mittels einer Halterungsmanschette 118 in eine entsprechende Nut des Rotors 12 eingepresst werden kann. Der Gleitkörper 102 und die Halterungsmanschette 118 bilden dabei zusammen ein Gleitelement.

Die Halterungsmanschette 118 kann dabei einen L-förmigen Querschnitt aufweisen und den Gleitkörper 102 radial außen und an der axialen Stirnseite, die von der Gleitfläche 104 abgewandt ist, zumindest teilweise umgeben. Abhängig von der Form des Rotors 12 kann die Halterungsmanschette 118 variiert werden, um eine einfache Montage und eine dichte und zuverlässige Halterung des Gleitkörpers 102 zu erzielen.

Bei der vorliegenden Ausführungsform ist die Halterungsmanschette 118 aus einem Elastomermaterial oder aus PTFE hergestellt. Dadurch kann der Gleitkörper 102 derart in den Rotor 12 eingepresst werden, dass auch auf der Rotorseite der Dichtanordnung 100 eine hohe Dichtigkeit erzielt werden kann und das Gleitelement ist somit sicher und dicht in der Aufnahmenut 28 des Rotors montiert.

Bei Betrieb der Pumpe 10 werden die beiden Elastomerelemente 108, 112 der Dichtanordnung zumindest teilweise elastisch verformt, so dass das erste Elastomerelement 108 in axialer Richtung gegen die sich drehende Gleitfläche 104 des Rotors 12 gedrückt wird. Dabei wird die Dichtanordnung 100 durch das Fluid, das im Pumpenkanal 18 gefördert wird, geschmiert. Fluid, welches am ersten Elastomerelement 108 vorbei in das Pumpengehäuse 14 eintritt, wird dabei durch das zweite Elastomerelement 112 daran gehindert, weiter im Pumpengehäuse 14 vorzudringen, so dass durch die Dichtanordnung 100 eine gute Abdichtung des Pumpenkanals 18 gegenüber dem Motor und dem Pumpengehäuse 14 der Pumpe 10 erreicht wird.

Dadurch, dass Vibrationen beim Betrieb der Pumpe 10 durch elastische Verformung der beiden Elastomerelemente 108, 112 ausgeglichen werden können, kann der Pumpenkanal bei einem Betriebsdruck von bis zu 15 bar zuverlässig abgedichtet werden. Die verwendeten Bauteile können dabei aus Materialien gefertigt werden, die für die Verwendung bei der Lebensmittelverarbeitung zugelassen sind und welche bei üblichen Betriebstemperaturen, beispielsweise bis 100°C, stabil sind.

Bei einer Reinigung oder Wartung der Pumpe 10 wird der Rotor 12 mit dem daran befestigten Gleitelement von der Welle 16 abgezogen. Das Gleitelement kann dann vom Rotor 12 getrennt werden, indem die Halterungsmanschette 118 aus ihrer Halterungsnut im Rotor 12 herausgenommen wird.

Die Dichthülse 106 und die beiden Elastomerelemente 108, 112 können nach Abnehmen des Rotors 12 einfach aus dem Pumpengehäuse 14 herausgenommen werden und sind daher für eine Reinigung oder einen Austausch leicht zugänglich, ohne dass hierfür Spezialwerkzeuge eingesetzt werden müssten. Dadurch kann auch eine ungelernte Hilfskraft die Pumpe 10 gemäß der voranstehend beschriebenen Ausführungsform warten und reinigen.

Bei der gezeigten Ausführungsform ist die Gleitfläche 104 am Rotor 12 angebracht, und das erste Elastomerelement 108, das mit der Gleitfläche 104 in Kontakt ist, ist über die Dichthülse 106 am Pumpengehäuse 14 angebracht. Bei anderen, nicht dargestellten Ausführungsformen kann jedoch stattdessen das erste Elastomerelement am Rotor befestigt sein und die Gleitfläche, die mit dem ersten Elastomerelement in axialer Richtung in Kontakt steht, kann am Pumpengehäuse angebracht sein. Auch hier kann die Gleitfläche wieder aus einem geeigneten Keramik-Werkstoff hergestellt sein, und das Elastomerelement kann beispielsweise als ein O-Ring oder als ein Quadring ausgeführt sein.

Zusammenfassend beschreibt die vorliegende Offenbarung somit eine Pumpe 10 und eine Dichtanordnung 100 mit einer hohen Dichtigkeit, so dass insbesondere beim Pumpen von Lebensmitteln sichergestellt werden kann, dass das zu pumpende Fluid nicht durch Schmiermittel oder dergleichen verunreinigt wird. Weiterhin ist die beschriebene Dichtanordnung 100 durch die Verwendung von Elastomerelementen 108, 112 auch bei Vibrationen der Pumpe 10 stabil, ist einfach in bestehende Pumpen nachzurüsten und kann ohne Werkzeug gewartet und ausgetauscht werden.

Die am Rotor 12 angebrachte Gleitfläche 104 der Dichtanordnung 100 wird dabei in axialer Richtung gegen die Elastomer-Oberfläche des ersten Elastomerelements 108 gedrückt und bei Betrieb der Pumpe 10 durch das zu pumpende Fluid geschmiert. Dadurch kann Abrieb an der Gleitfläche 104 und am Elastomerelement 108 minimiert werden.

## Patentansprüche

1. Pumpe (10) mit
wenigstens einem um eine Drehachse drehbaren Rotor (12),
einem Pumpengehäuse (14), das den Rotor (12) umgibt, wobei ein Pumpenkanal (18) zwischen einer radial innen liegenden Oberfläche des Pumpengehäuses (14) und einer radial außen liegenden Oberfläche des Rotors (12) gebildet ist, und
einer Dichtanordnung (100), welche den Pumpenkanal (18) an einer Endfläche des Rotors (12) abdichtet, wobei die Dichtanordnung (100) umfasst:
eine Gleitfläche (104), welche an einem Element aus dem Rotor (12) und dem Pumpengehäuse (14) vorgesehen ist und welche sich senkrecht zur axialen Richtung des Rotors (12) erstreckt;
eine statische Fläche (120), welche an dem jeweils anderen Element aus dem Rotor (12) und dem Pumpengehäuse (14) vorgesehen ist; und
ein erstes Elastomerelement (108), das an der statischen Fläche (120) angebracht ist und in axialer Richtung gegen die Gleitfläche (104) gedrückt wird.

2. Pumpe (10) nach Anspruch 1, wobei die Gleitfläche (104) aus einem Keramikwerkstoff, wie beispielsweise Siliciumkarbid, SiC, gesintertem Siliciumkarbid, SSiC oder Wolframkarbid, TC gebildet ist.

3. Pumpe (10) nach einem der Ansprüche 1 oder 2, wobei die Dichtanordnung (100) ferner eine Dichthülse (106) umfasst, welche im Pumpengehäuse (14) vorgesehen ist, wobei eine Oberfläche der Dichthülse (106) die statische Fläche (120) bildet.

4. Pumpe (10) nach Anspruch 3, wobei die Dichthülse (106) eine Metallhülse ist, welche über ein zweites Elastomerelement (112) am Pumpengehäuse (14) in axialer Richtung abgestützt ist.

5. Pumpe (10) nach Anspruch 4, wobei die Dichthülse (106) in axialer Richtung relativ zum Pumpengehäuse (14) beweglich ist, und wobei das zweite Elastomerelement (112) zwischen dem Pumpengehäuse (14) und einer senkrecht zur axialen Richtung verlaufenden Anlagefläche (116) der Dichthülse vorgesehen ist.

6. Pumpe (10) nach einem der Ansprüche 4 oder 5, wobei beide Elastomerelemente (108, 112) in axialer Richtung komprimiert sind.

7. Pumpe (10) nach einem der Ansprüche 3 bis 5, wobei die Dichthülse (106) wenigstens eine Verdrehsicherung umfasst, um eine Verdrehung der Dichthülse (106) gegenüber dem Pumpengehäuse (14) zu verhindern.

8. Pumpe (10) nach einem der Ansprüche 3 bis 7, wobei die Dichthülse (106) einen zylinderförmigen Grundkörper und einen vom Grundkörper radial nach außen weisenden Kragen (114) umfasst, wobei die Dichthülse (106) über den Kragen (114) am Pumpengehäuse (14) abgestützt ist.

9. Pumpe (10) nach Anspruch 8, wobei eine Oberfläche des Kragens die statische Fläche (120) ist, welche das erste Elastomerelement (108) aufnimmt.

10. Pumpe (10) nach einem der Ansprüche 1 bis 9, wobei der Rotor (12) eine Aufnahmenut (28) aufweist, in welcher ein Gleitelement austauschbar montiert ist, wobei das Gleitelement die Gleitfläche (104) umfasst.

11. Pumpe nach Anspruch 10, wobei das Gleitelement eine Halterungsmanschette (118) umfasst, mittels dessen es in der Aufnahmenut (28) des Rotors (12) befestigbar ist, und einen Gleitkörper (102), dessen in axialer Richtung außen liegende Oberfläche die Gleitfläche (104) bildet.

12. Dichtungsmodul (100), umfassend:
ein erstes und ein zweites Elastomerelement (108, 112);
eine Dichthülse (106) mit jeweiligen Aufnahmen (110, 116) für das erste und das zweite Elastomerelement (108, 112), wobei die Aufnahmen (110, 116) an Flächen der Dichthülse gebildet sind, die sich in axialer Richtung gegenüber liegen, und
eine Gleitfläche (104), welche auf das erste Elastomerelement (108) aufgelegt ist und welche an einem Rotor (12), der relativ zur Dichthülse (106) rotiert, montierbar ist.

13. Dichtungsmodul (100) nach Anspruch 12, wobei die Dichthülse (106) einen zylinderförmigen Grundkörper und einen vom Grundkörper radial nach außen weisenden Kragen (114) umfasst, wobei die Aufnahmen (110, 116) für die Elastomerelemente (108, 112) in gegenüberliegenden Oberflächen des Kragens (114) gebildet sind.

14. Rotormodul, umfassend:
einen Rotor (12), an dem eine senkrecht zur axialen Richtung verlaufende Gleitfläche (104) angebracht ist,
ein erstes und ein zweites Elastomerelement (108, 112);
eine Dichthülse (106) mit jeweiligen Aufnahmen (110, 116) für das erste und das zweite Elastomerelement (108, 112), wobei die Aufnahmen (110, 116) in Flächen der Dichthülse (106) gebildet sind, die sich in axialer Richtung gegenüber liegen, und
wobei das erste Elastomerelement (108) an der Gleitfläche (104) des Rotors (12) anliegt.

15. Rotormodul nach Anspruch 14, wobei der Rotor eine Aufnahmenut (28) aufweist, in welcher über eine im Querschnitt L-förmige Halterungsmanschette (118) ein Gleitkörper (102) austauschbar montiert ist, wobei der Gleitkörper (102) die Gleitfläche (104) umfasst.
